(19) Europäisches Patentamt
European Patent Office
Office européen des brevets

(11) Publication number: **0 247 987 B1**

(12) **EUROPEAN PATENT SPECIFICATION**

(45) Date of publication of patent specification: **07.08.91**

(51) Int. Cl.[5]: **C01F 7/00**, C01F 11/00

(21) Application number: **87850172.5**

(22) Date of filing: **21.05.87**

(54) **A basic metal hydroxysulphate complex in solid form and a method for its manufacture.**

(30) Priority: **27.05.86 SE 8602417**

(43) Date of publication of application:
**02.12.87 Bulletin 87/49**

(45) Publication of the grant of the patent:
**07.08.91 Bulletin 91/32**

(84) Designated Contracting States:
**AT BE CH DE ES FR GB GR IT LI LU NL SE**

(56) References cited:
**EP-A- 0 069 718**
**EP-A- 0 069 719**
**US-A- 4 526 772**

(73) Proprietor: **KEMIRA KEMI AKTIEBOLAG**
**P.O. Box 902**
**S-251 09 Helsingborg(SE)**

(72) Inventor: **Kvant, Magnus Birger**
**Korsakersvägen 57**
**S-222 50 Lund(SE)**

(74) Representative: **Inger, Lars Ulf Bosson et al**
**L + U INGER Patentbyra AB Garvaregatan 12**
**S-262 00 Ängelholm(SE)**

EP 0 247 987 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Technical field

The present invention relates to a product in solid form containing a basic metal hydroxysulphate, and a method for producing polynucleate basic $Me^{3+}$ hydroxysulphate in solid form which when dissolved in water produces positively charged polynucleate complexes possessing charge neutralizing properties in systems that contain suspended or colloidal negatively charged particles.

The object of the present invention is to obtain a rational method for producing industrially polynucleate, basic aluminium hydroxysulphate and/or ferri hydroxysulphate in solid form.

Background of the invention

There are known to the art a number of aluminium products which contain polynucleate aluminium ions in solution. These products have been produced in response to the demand for more effective chemicals for use, e.g. in water purification, paper sizing, and plant dewatering processes. The products accordingly exhibit considerably improved properties for use within the aforesaid technical fields, due to the higher electrical charge of the metal ions in comparison with the earlier simple compounds. The aluminium products developed with the object of improving efficiency when used in accordance with the foregoing are principally of two kinds, these being a) chloride-based basic aluminium compounds and b) sulphate based basic aluminium compounds. With regard to the first group there was initially developed a polyaluminium chloride (PAC) of the general formula

$[AlCl_x(OH)_{3-x}]_n$

where x is <3, normally 1-2.

Such compounds and methods for their manufacture are found described, for example, in SE-B-7201333-7, SE-B-7405237-4, SE-B-7412965-1, SE-B-7503641-8, and DE-A-2630768.

The other type of aluminium chloride solutions, PALC, which are also based on the same polynucleate complexes have the general formuli which can be written as:

$[AlCl_3 \cdot xAOH]_n$

where A signifies alkali metal, and

$[AlCl_3 \cdot \frac{x}{2} B(OH)_2]_n$

where B signifies an alkaline earth metal, n is a positive integer, and x is a number in the range 1-2.7.

Polynucleate aluminium chloride solutions of the PALC-type are described in FR-A1-7512975, according to which the solutions are prepared by alkalizing aluminium chloride solutions with solutions of alkali hydroxide. According to this publication, however, it has not been possible to produce clear, stable solutions other than in a highly diluted state. By "stable solution" is meant here and in the following a solution which will not change with regard to its composition and properties, even when stored for long periods of time. Thus it is stated in the aforesaid publication that a solution containing up to 0.40 moles of aluminium per litre can be obtained under certain circumstances. The stability of the solution, however, is greatly limited and the solution must be injected directly into the water to be cleansed. It is clearly evident from the publication, and in particular from the working examples that solutions having aluminium concentrations above about 0.1 mole/l cannot be expected to be effective and stable in the known PALC-solutions according to this publication.

Sulphate-based basic aluminium compounds have been described in EP-A-79850039-3, EP-A-80850033-4, and SE-A-8101830-1.

These products contain polynucleate metal-ions in solutions to a greater or lesser extent, and are thus effective water-cleansing agents. The sulphate-based products can also be used for purposes other than for cleansing water, in which the presence of polynucleate metal-ions favours the effects desired. In certain cases, however, it is highly desirable, and even necessary, to restrict the supply of sulphate-ions to the smallest possible amount in applications within the aforesaid fields of use, and particularly when using the product to produce drinking or tap water. This is particularly important in the case of systems used and cleansed repeatedly in order to eliminate the risk of sulphide accumulation in tissue and in water, this latter

with regard to the corrosion of concrete. This thus applies to certain water purifying systems used in areas where there is a water deficiency, necessitating the available water to be used repeatedly for as long as possible, with intermediate cleansing of the water. In water such as this, after cleansing the water ten times with conventional aluminium sulphate or compositions having corresponding sulphate contents (FALS), the sulphate content of the water may reach such high levels as to result in an attack on the water-carrying conduit-system, resulting in troublesome leakages. The problem of enrichment of sulphate ions has now also become manifest in the manufacture of paper, where the water transportation system is, to a large extent, completely closed for environmental purposes. The manufacturing processes are seriously affected by excessively high salt concentrations in the paper stock.

US-A-4,238,347 discloses a method of producing sulphate-lean basic aluminium sulphate of the formula:

$Al(OH)_x(SO_4)_y(H_2PO_4)_z(H_2O)_w$

where
x is 0.75 - 1.5;
y is 0.7 - 1.07;
z is 0 - 0.2, and
w is 2.0 - 4.2, wherein
x + 2y + z is equal to 3.

The compounds are prepared by reacting aluminium sulphate with comminuted calcium carbonate, optionally in the presence of phosphoric acid, and passing the reaction mixture through a filter to isolate the gypsum formed.

It has been found, however, that the carbon dioxide leaving the reaction process with the calcium carbonate together with the gypsum creates certain technical problems.

EP-A-0 069 718 and EP-A-0 069 719 describe an improved method for producing sulphur lean polynucleate aluminium hydroxide complexes of the formula:

$[Al(OH)_x(SO_4)_y(H_2O)_z]_n$

where
n is an integer
x is 0.75 - 2.0;
y is 0.5 - 1.12;
x + 2y is 3;
z is 1.5 - 4, z being ≦ 4 when the product is in solid form, and
z is >>4 when the product is in solution, wherein aluminium sulphate is reacted with one or more compounds taken from the group CaO, $Ca(OH)_2$, BaO, $Ba(OH)_2$, SrO, $Sr(OH)_2$ in aqueous solution to form the aforesaid compound, thereafter the resultant earth alkali metal sulphate precipitate is isolated and the residual solution optionally evaporated. The resultant solution has splendid properties and can be obtained with a high basicity, OH/Al ≦2.0. Manufacture is complicated, however, since isolation of the earth alkali metal sulphate is difficult to achieve and places specific demands on the technical equipment used.

These references also teach that these complexes are unstable but can be stabilized by adding different organic complex formers to the solution of the polynucleate complexes. No economical route of preparing a stable solid form product is given.

Another method of producing these complexes is described in SE-A-8206206-8, this method comprising cooling a solution containing a polynucleate hydroxide sulphate complex of the formula:

$Al_m(OH)_n^{(3m-n)+}$

in which the anion is

$$(SO_4)^{(3m-n)-}_{(3m-n)/2}$$

where m and n are integers, and which has been prepared by alkalizing aluminium sulphate with an alkali

from the group NaOH, and $Na_2CO_3$, so as to crystallize out $Na_2SO_4 \cdot 10H_2O$, which is then separated out and the residual solution optionally concentrated or dried to solid form by evaporation.

Still a further method of producing this complex is described in SE-A-8206207-6, in which a solution of an aluminium salt is neutralized to pH 5-7 to precipitate amorphous aluminium hydroxide which is isolated and thereafter contacted with sulphate ions in the form of aluminium sulphate and/or sulphuric acid to a y-value of 0.5-1.12, preferably 0.5-0.75, this product being optionally converted to a solid form.

The conversion of the solution to a solid form in order to maintain the stability of the complex in those circumstances when the presence of costly stabilizing agents are not desired is both complicated and expensive, such that the final product is not truly competitive with standard aluminium sulphate (BOLIDEN® ALG) or aluminium-ferri sulphate (BOLIDEN® AVR), for use in water cleansing processes. Water cleansing processes, drinking water, and then in particular domestic sewage purification processes require the presence of large quantities of flocculating agents for precipitating out the impurities present, such as, inter alia, phosphorous, and the cost of the water cleansing chemicals required in sewage purification in particular is very high. Demands have therefore been made for more effective and relatively inexpensive chemicals.

## Disclosure of the present invention

It has now surprisingly been found possible to eliminate these technical problems in a simple and an efficient manner with the aid of the product according to the present invention, which product contains a sulphate-lean basic metal hydroxysulphate of the general formula

$$[Me^{3+}(OH)_x(SO_4)_y(H_2O)_z]_n$$

wherein Me is Al and/or Fe, n is an integer; x is 0.75-2.0, preferably 1.0-2.0, more preferably 1.5-2.0; y is 0.5-1,12; x+2y is 3; and z 1.5-4, the product in addition to said complex the product also contains calcium sulphate hemihydrate, the mole ratio Ca, expressed as $Ca(OH)_2$, and $Me^{3+}$, expressed as $Me_2{}^{3+}(SO^4)_3$, being at most 2, and the product containing water in an amount, expressed as water of crystallization per mole $Me_2{}^{3+}(SO_4)_3$, of at most $6H_2O$.

The mole ratio $Ca(OH)_2$ to $Me_2{}^{3+}(SO^4)_3$ is suitably 1.0-2.0, although preferably 1.5-2.0.

The product is also produced in accordance with the invention in a simple and rational manner, the method being characterized by mixing to molten aluminium sulphate, $Al_2(SO_4)_3 \cdot 14H_2O$ and/or aluminium sulphate-ferri sulphate, $Al_2(SO_4)_3 \cdot 14H_2O$; $Fe_2(SO_4)_3 \cdot 9H_2O$, with a calcium compound taken from the group $Ca(OH)_2$, CaO, $CaCO_3$, $CaMg(CO_3)_2$; optionally expelling water from the mixture; and cooling the mixture to obtain a comminutable, or grindable solid product containing polyaluminiumhydroxide sulphate complex and optionally polyferri hydroxy sulphate complex and calcium sulphate hemihydrate.

Further characteristic features of the method and the product produced thereby are set forth in the following claims.

It has not been possible previously to prepare a complex of the aforegiven formula at temperatures higher than 70 °C when practising the known methods, due to decomposition of the complex at said higher temperatures. It is therefore particularly surprising that the claimed product can be produced successively by means of the method according to the present invention.

Particularly preferred compounds produced are those in which

x is 1.6-1.8;

y is 0.6-0.7.

The compound exists in the form of a polynucleate complex in aqueous solution and has the same form when solid.

The solid product obtained in accordance with the invention dissolves relatively quickly in water (<2 min), even when ground or comminuted to a relatively coarse particle size. The gypsum present is suspended in the resultant solution, while the metal hydroxysulphate complex is dissolved therein. The water cleansing properties of the obtained suspension have been found to be far superior to those of conventional aluminium sulphate products (BOLIDEN® ALG, AVR).

The reason why the respective constituents of the product rapidly suspend and dissolve in a water phase is probably due to the fact that the gypsum present, which has a hemihydrate form in the solid product is rearranged to dihydrate therewith causing an increase in volume and temperature such as to accelerate the dissolution reaction.

The present invention will now be described more in detail with reference to a number of working examples.

**Example1**

A product having a high mole ratio OH/Me (1.7) was prepared from 100 grams of molten aluminium sulphate-ferri sulphate (BOLIDEN$^R$ ARV, $Al_2(SO_4)_3 \cdot 14H_2O$; $Fe_2(SO_4)_3 \cdot 9H_2O$, 7% Al, 3% Fe). The temperature of the melt was 115°C and the melt was held at this temperature while mixing 15.0 g CaO with the melt over a period of 2 minutes. The resultant product reaction mixture was then cooled to room temperature, the molten product gradually transforming into a solid, comminutable product.

The final product was analysed and found to contain water in an amount corresponding to $6H_2O$ per mole $(Al, Fe)_2(SO_4)_3$. The polynucleate aluminium sulphate-ferri sulphate complex present in the product contains 1.7 OH per mole Me (Al, Fe). The product comprised $CaSO_4 \cdot 0.5H_2O$, calcium sulphate hemihydrate.

**Example2**

100 g $Al_2(SO_4)_3 \cdot 14H_2O$ having a temperature of 115°C were admixed with 15.5 g CaO, there being obtained in a manner similar to Example 1 an end product having an OH/Al ratio of 1.65 in the resultant polyaluminium hydroxysulphate complex.

In those cases where calcium hydroxide is used, it is necessary to evaporate off larger quantities of water, in order to obtain a comminutable product. This can be effected by maintaining the product at an elevated temperature, or by reacting the product in a vessel of large surface area so as to rapidly evaporate the water present.

It has been found that with a dry solids content of 69% or thereabove in $Me_2(SO_4)_3 \cdot xH_2O$ measured by expelling water in a conventional domestic microwave oven for five minutes at maximum power, it is necessary to expel water during the reaction between $Me_2(SO_4)_3$ and CaO.

In order to obtain a comminutable or grindable product, the $Me_2O_3$-content of the polymetal hydroxy complex of the end product shall be in excess of 14% by volume, the calcium sulphate being precipitated out as hemihydrate. As beforementioned, this means that the crystallization water present per mole of ingoing $Al_2(SO_4)_3$ or $(Al,Fe)_2(SO_4)_3$, about $14H_2O$, is reduced to $6H_2O$ in the end product.

A product according to Example 1 (PAV) above was tested with regard to its ability to clarify turbid sewage water. The test also includes a comparison test using standard aluminium sulphate-ferri sulphate (AVR). The starting turbidity was >100 FTU. As will be seen from the following table, the product according to the present invention gave a far better result than the standard product.

**Table**

| Dosage | Turbidity FTU * | |
|---|---|---|
| mmole/l Me | PAV | AVR |
| 140 | 3.5 | 35 |
| 160 | 3.5 | 35 |
| 180 | 3.0 | 35 |
| 200 | 3.0 | 37 |
| 220 | 3.0 | 38 |
| 240 | 4.0 | 42 |
| 260 | 5.0 | 47 |
| 280 | 5.0 | 51 |

* Fulton turbidity units

As shown by the Table, the product according to the invention exhibits a highly linear, flat register and

overdosing does not increase the turbidity in any way.

## Claims

1. A solid product containing a polynucleate basic $Me^{3+}$ hydroxysulphate complex of the formula

$$[Me^{3+}(OH)_x(SO_4)_y(H_2O)_z]_n$$

wherein Me is Al and/or Fe, n is an integer; x is 0.75-2.0, preferably 1.0-2.0, more preferably 1.5-2.0; y is 0.5-1,12; x+2y is 3; and z=1.5-4, said product when dissolved in water giving a positively charged polynucleate complex possessing charge neutralizing properties in systems containing suspended or colloidal negatively charged particles, **characterized** in that in addition to said complex the product also contains calcium sulphate hemihydrate, the mole ratio Ca, expressed as $Ca(OH)_2$, and $Me^{3+}$, expressed as $Me_2{}^{3+}(SO^4)_3$, being at most 2, and the product containing water in an amount, expressed as water of crystallization per mole $Me_2{}^{3+}(SO_4)_3$, of at most $6H_2O$.

2. A polynucleate complex containing product according to claim 1, wherein the mole ratio $Ca(OH)_2$ to $Me_2{}^{3+}(SO^4)_3$ is 1.0-2.0, preferably 1.5-2.0.

3. A method for producing a polynucleate basic $Me^{3+}$ hydroxysulphate complex containing product in solid form, which product when dissolved in water will provide a positively charged polynucleate complex possessing charge neutralizing properties in systems containing suspended or colloidal negatively charged particles, **characterized** by adding to molten aluminium sulphate and/or aluminium sulphate-ferri sulphate a calcium compound taken from the group $Ca(OH)_2$, CaO, $CaCO_3$ and $CaMg(CO_3)_2$ and permitting ingoing constituents to react to form said basic $Me^{3+}$ hydroxysulphate complex and calcium sulphate hemihydrate; and by cooling the resultant product reaction mixture to ambient temperature to form a comminutable or grindable solid product containing polyaluminium hydroxysulphate complex and/or polyferri hydroxysulphate complex and calcium sulphate hemihydrate.

4. A method according to claim 3, wherein the melt has a temperature of 100-115 °C.

5. A method according to claim 3, wherein the dry solids contents of the metal sulphate present, is at least 69%, determined by heating the product in a conventional domestic microwave oven for 5 minutes at maximum power output.

## Revendications

1. Produit solide contenant un complexe polynucléaire d'hydroxysulfate de $Me^{3+}$ basique, répondant à la formule :

$$[Me^{3+}(OH)_x(SO_4)_y(H_2O)_z]_n$$

dans laquelle Me représente Al et/ou Fe, n est un nombre entier; x est égal à 0,75-2,0, de préférence à 1,0-2,0, plus particulièrement à 1,5-2,0; y est égal à 0,5-1,12; x + 2y est égal à 3; et z est égal à 1,5-4, ce produit, lorsqu'il est dissous dans de l'eau, donnant un complexe polynucléaire à charge positive présentant des propriétés de neutralisation de charge dans des systèmes contenant des particules à charge négative en suspension ou colloïdales, caractérisé en ce que, en plus du complexe susdit, le produit contient également du sulfate de calcium hémihydraté, le rapport molaire entre Ca, exprimé pour le $Ca(OH)_2$, et le $Me^{3+}$, exprimé pour le $Me_2{}^{3+}(SO_4)_3$, étant de 2 au plus, ce produit contenant de l'eau en une quantité, exprimée pour l'eau de cristallisation par mole de $Me_2{}^{3+}(SO_4)_3$, de $6H_2O$ au plus.

2. Produit contenant un complexe polynucléaire suivant la revendication 1, caractérisé en ce que le rapport molaire du $Ca(OH)_2$ au $Me_2{}^{3+}(SO_4)_3$ = 1,0-2,0 de préférence 1,5-2,0.

3. Procédé de préparation d'un produit contenant, sous forme solide, un complexe polynucléaire d'hydroxysulfate de $Me^{3+}$ basique, ce produit, lorsqu'il est dissous dans de l'eau, donnant un complexe polynucléaire à charge positive présentant des propriétés de neutralisation de charge dans des

systèmes contenant des particules à charge négative en suspension ou colloïdales, ce procédé étant caractérisé par l'addition à du sulfate d'aluminium et/ou du ferrisulfate-sulfate d'aluminium fondu, d'un composé de calcium pris dans le groupe comprenant $Ca(OH)_2$, CaO, $CaCO_3$ et $CaMg(CO_3)_2$, en laissant réagir les constituants entrants pour former le complexe susdit d'hydroxysulfate de $Me^{3+}$ basique et du sulfate de calcium hémihydraté, et par le refroidissement du mélange de réaction produit résultant jusqu'à la température ambiante pour former un produit solide pulvérisable ou broyable, contenant un complexe polynucléaire d'hydroxysulfate d'aluminium et/ou un complexe polynucléaire de ferrihydroxysulfate, et du sulfate de calcium hémihydraté.

**4.** Procédé suivant la revendication 3, caractérisé en ce que la masse fondue a une température de 100-115° C.

**5.** Procédé suivant la revendication 3, caractérisé en ce que la teneur en matières solides sèches du sulfate de métal présent est d'au moins 69 %, cette teneur étant déterminée en chauffant le produit dans un four haute-fréquence domestique traditionnel pendant 5 minutes au débit maximum de puissance.

**Patentansprüche**

**1.** Festes Produkt, das einen vielkernigen basischen $Me^{3+}$-Hydroxysulfatkomplex der Formel

$$[Me^{3+}(OH)_x(SO_4)_y(H_2O)_z]_n$$

enthält, worin Me Al und/oder Fe ist, n eine ganze Zahl ist, x 0,75 - 2,0, vorzugweise 1,0 - 2,0, stärker bevorzugt 1,5 - 2,0 ist, y 0,5 - 1,12 ist, x + 2y 3 ist und z 1,5 - 4 ist, wobei dieses Produkt beim Lösen in Wasser einen positiv geladenen vielkernigen Komplex ergibt, der ladungsneutralisierende Eigenschaften in Systemen, die suspendierte oder kolloidale negativ geladene Teilchen enthalten, besitzt, **dadurch gekennzeichnet**, daß das Produkt zusätzlich zu diesem Komplex auch Calciumsulfathemihydrat enthält, wobei das Molverhältnis von Ca, ausgedrückt als $Ca(OH)_2$, und $Me^{3+}$, ausgedrückt als $Me_2{}^{3+}(SO_4)_3$, höchstens 2 ist und das Produkt Wasser in einer Menge, ausgedrückt als Kristallisationswasser je Mol $Me_2{}^{3+}(SO_4)_3$, von höchstens $6H_2O$ enthält.

**2.** Produkt, das einen vielkernigen Komplex enthält, nach Anspruch 1, worin das Molverhältnis von $Ca(OH)_2$ zu $Me_2{}^{3+}(SO_4)_3$ 1,0 - 2,0, vorzugsweise 1,5 - 2,0 ist.

**3.** Verfahren zur Herstellung eines Produktes, das einen vielkernigen basischen $Me^{3+}$-Hydroxysulfatkomplex enthält, in fester Form, wobei dieses Produkt beim Auflösen in Wasser einen positiv geladenen vielkernigen Komplex liefert, der in Systemen, welche suspendierte oder kolloidale negativ geladene Teilchen enthalten, ladungsneutralisierende Eigenschaften besitzt, **dadurch gekennzeichnet**, daß man zu geschmolzenem Aluminiumsulfat und/oder Aluminiumsulfatferrisulfat eine Calciumverbindung aus der Gruppe $Ca(OH)_2$, CaO, $CaCO_3$ und $CaMg(CO_3)_2$ zugibt und die Bestandteile unter Bildung des basischen $Me^{3+}$-Hydroxysulfatkomplexes und von Calciumsulfathemihydrat reagieren läßt und das resultierende Reaktionsgemisch auf Umgebungstemperatur kühlt, um ein zerkleinerungsfähiges oder mahlfähiges festes Produkt zu bilden, das Polyaluminiumhydroxysulfatkomplex und/oder Polyferrihydroxysulfatkomplex sowie Calciumsulfathemihydrat enthält.

**4.** Verfahren nach Anspruch 3, bei dem die Schmelze eine Temperatur von 100 bis 115 °C hat.

**5.** Verfahren nach Anspruch 3, bei dem die Trockenfeststoffgehalte des vorhandenen Metallsulfats wenigstens 69 %, bestimmt durch Erhitzen des Produktes in einem herkömmlichen Hausmikrowellenofen während 5 min bei maximaler Leistung, betragen.